# EUROPÄISCHE PATENTSCHRIFT

(11) **EP 0 574 750 B1**
(45) Veröffentlichungstag und Bekanntmachung des Hinweises auf die Patenterteilung: **17.01.1996**
(21) Anmeldenummer: 93108530.2
(22) Anmeldetag: 26.05.1993
(51) Int. Cl.: B65G 47/30, B65G 47/69

(54) **Verfahren und Vorrichtung zum Umformen eines mehrspurigen Gefässstromes in einen einspurigen Gefässstrom**
Method and device for transforming a multiple row container stream in a single row of containers
Procédé et dispositif pour transformer un flux de récipients à plusiers voies en une voie unique

(30) Priorität: 13.06.1992 DE 4219506; 24.09.1992 DE 4231993
(43) Veröffentlichungstag der Anmeldung: 22.12.1993
(73) Patentinhaber: KRONES AG Hermann Kronseder Maschinenfabrik, D-93068 Neutraubling (DE)
(72) Erfinder: Schneider, Egon, W-8402 Neutraubling (DE)
(74) Vertreter: Grünecker, Kinkeldey, Stockmair & Schwanhäusser Anwaltssozietät

(56) Entgegenhaltungen:
- DE-A- 3 214 172
- DE-A- 4 009 515
- GB-A- 2 114 521
- US-A- 4 265 356

## Beschreibung

Die Erfindung betrifft ein Verfahren und eine Vorrichtung zum Umformen eines mehrspurigen Gefäßstromes in einen einspurigen Gefäßstrom gemäß dem Oberbegriff der Ansprüche 1 und 9.

Eine derartige Transportvorrichtung ist durch das europäische Patent 0 175 292 bekannt geworden. Bei dieser Transportvorrichtung werden durch einen kontinuierlich arbeitenden Zuförderer Flaschen in dicht gedrängter Formation einem Zwischenförderer mit mehreren, stufenweise schneller laufenden Förderspuren zugeführt. Im Übergangsbereich zwischen dem Zu- und Zwischenförderer ist ein Überschubblech mit einer schrägen, zum Zwischenförderer weisenden Kante angeordnet. Die Kante steht in einem Winkel von 60 Grad zur Förderrichtung. Dabei wird die Tatsache ausgenutzt, daß sich bei dicht gedrängter, mehrreihiger Zufuhr von rotationssymmetrischen Gefäßen auf einem entlang seiner Längsseiten mit Führungsflächen begrenzten Förderer selbsttätig eine typische Gefäßformation einstellt, die durch schräg in einem Winkel von 60 Grad zur Förderrichtung ausgerichtete Gefäßreihen charakterisiert wird. Durch die Verwendung des vorgenannten Überschubbleches kann der Zwischenförderer fortlaufend nacheinander schrägstehende Gefäßreihen mit höherer Geschwindigkeit abziehen, wobei diese Gefäßreihen unter Zuhilfenahme von Hangabtrieb und Führungseinrichtungen in eine schnell ablaufende einspurige Gefäßreihe umgeformt werden.

Nachteilig an dieser Transportvorrichtung ist zum einen die Tatsache, daß sich bei der Verarbeitung von Gefäßen mit nicht rotationssymmetrischem Querschnitt die erforderliche Formation im Bereich vor dem Zwischenförderer nicht selbsttätig einstellt und zum anderen, daß die durch den Zuförderer zugeführten Gefäße während dem Umformvorgang ihre ursprüngliche Ausrichtung bezüglich der Förderrichtung nicht beibehalten. Dies ist insofern als Nachteil anzusehen, da dann nach der Umformung des mehrspurigen Gefäßstromes in einen einspurigen Gefäßstrom zusätzlich Einrichtungen zum Ausrichten der Formgefäße erforderlich sind, um sie vor dem Einlaufen in eine nachfolgende Gefäßbehandlungsmaschine wieder in die erforderliche einheitliche, ausgerichtete Position zu bringen.

Der Erfindung liegt daher die Aufgabe zugrunde, ein Verfahren und eine Vorrichtung anzugeben, das/die mit geringem Aufwand und einfachen Mitteln die Umformung eines mehrspurigen Gefäßstromes in einen einspurigen Gefäßstrom auch für Gefäße mit nicht rotationssymmetrischem Querschnitt erlaubt, wobei die Ausrichtung der Gefäße bezüglich der Förderrichtung während des Umformvorganges beibehalten werden soll.

Diese Aufgabe wird durch die kennzeichnenden Merkmale des Anspruchs 1 bzw. des Anspruchs 9 gelöst.

Durch das taktweise Abgeben gleichlanger, einspuriger, in Förderrichtung hintereinander und quer zur Förderrichtung parallel zueinander versetzt angeordneter Gefäßpulks vom Zuauf den Zwischenförderer kann -trotz des taktweisen Betriebs des mehrspurigen Zuförderers- eine kontinuierlich ablaufende einspurige Gefäßreihe erzeugt werden, wie sie üblicherweise zur Beschickung von Gefäßbehandlungsanlagen, z.B. Flaschenfüllinien, erforderlich ist. Dieses Prinzip erlaubt ein reißverschlußartiges Einordnen oder Zusammenführen der einzelnen quer zueinander versetzten Gefäßpulks unter Beibehaltung ihrer ursprünglichen Lage bzw. Ausrichtung der äußeren Form bezüglich der Förderrichtung. Im Umformbereich müssen die einzelnen einspurigen Gefäßpulks lediglich quer zur Förderrichtung zum Abförderer hin versetzt werden, wodurch eine einspurige Reihe erzeugt wird. Das Querversetzen bzw. -verschieben kann auf äußerst einfache Weise, z.B. durch eine im spitzen Winkel zur Förderrichtung angeordnete, sich schräg über den Zwischenförderer erstreckende Leitfläche, erfolgen.

Da das erfindungsgemäße Verfahren zum Umformen eines mehrspurigen Gefäßstromes in einen einspurigen Gefäßstrom ohne ein gegenseitiges Verdrängen der Gefäße im Umformbereich auskommt, sind keine speziellen Ausrichtvorrichtungen nach der Gefäßzusammenführung erforderlich. Es müssen die Gefäße lediglich mit der auf dem Abförderer gewünschten Ausrichtung auch einlaufseitig der Gefäßzusammenführung durch den Zuförderer zugeführt werden.

Speziell bei sogenannten Formflaschen bzw. -gläsern mit nicht rotationssymmetrischem Querschnitt ist dies mit geringem Aufwand realisierbar, da gerade Formflaschen häufig als Einweggebinde verwendet werden. Das bedeutet, daß die vom Flaschenhersteller lagenweise auf Paletten gestapelten Flaschen stapelweise zur Abfüllinie gebracht werden, wobei die Flaschen oder Gläser durch einen sogenannten Neuglasabräumer lagenweise vom Palettenstapel abgenommen und der Transportvorrichtung der Füllinie zugeführt werden. Vorteilhafterweise kann der Neuglasabräumer zugleich dazu benutzt werden, die in einem einheitlichen Lagemuster gestapelten Flaschen mit der am Auslauf der Gefäßzusammenführung gewünschten Ausrichtung bereits auf den taktweise laufenden Zuförderer abzugeben.

Es können aber ebenso gut Gefäße aus Kartons oder Kästen durch eine Auspackmaschine, die vorzugsweise ebenfalls taktweise arbeitet, auf den Zuförderer gestellt werden.

Die Gefäßzusammenführung kann auch zum Zusammenführen von Gefäßen mit rotationssymmetrischem Querschnitt eingesetzt werden.

Die Bildung von in Förderrichtung hintereinander versetzten einspurigen Gefäßpulks kann durch zeitlich hintereinander versetzten Antrieb der einzelnen Spuren des Zuförderers oder durch unterschiedlich schnell angetriebene Förderspuren des Zwischenförderers erzielt werden. Das gleiche Ergebnis kann mit deutlich geringerem steuerungs- und antriebstechnischen Aufwand durch einen gleichzeitigen Antrieb aller Spuren des Zuförderers erreicht werden, wozu ein einziger motorischer Antrieb genügt, sofern die einzelnen Spuren des Zuförderers in Richtung zum Umformbereich, d.h. zum Zwischenförderer, treppenartig in Förderrichtung abgesetzt sind und sich die zugeordneten Spuren des Zwischenförderers entsprechend angepaßt am Zuförderer anschließen.

Zweckmäßigerweise entspricht das Maß des treppenartigen Versatzes zwischen zwei benachbarten Spuren des Zuförderers der Länge der Gefäßreihen, die während der Stillstandsphase zwischen zwei Fördertakten des Zuförderers durch einen Neuglasabräumer oder eine Auspackmaschine auf den Zuförderer gestellt werden, oder ist geringfügig größer, um in Förderrichtung zwischen den Gefäßpulks beim Zusammenführen der einspurigen Gefäßpulks im Umformbereich jeweils einen Sicherheitsabstand zu haben.

Eine Ausführung der Erfindung wird nachfolgend anhand der Figuren erläutert. Es zeigen:
- Fig. 1: eine Draufsicht auf eine Zusammenführung und
- Fig. 2: eine Seitenansicht von einem Teil der Zusammenführung nach Fig. 1 aus der Richtung X betrachtet.

Der Zuförderer 1 wird durch drei parallel nebeneinander in einer Ebene geführte Plattenförderbänder 1a, 1b und 1c gebildet, die sich in Förderrichtung F jeweils um die Taktstrecke Tb und Tc hintereinander treppenartig versetzt bis zu den Überschubblechen 6a, 6b und 6c erstrecken. Von den Überschubblechen 6a, 6b und 6c beginnend schließen sich die Plattenförderbänder 2a, 2b und 2c des Zwischenförderers 2 in Förderrichtung F stumpf an den Förderbändern des Zuförderers 1 an. Das Förderband 2a ist in Förderrichtung F verlängert ausgeführt und bildet zugleich den Abförderer 3. Seitlich an den Abförderer 3 schließt sich ein Aufholband 4 an.

Im Umformbereich U erstreckt sich unter einem spitzen Winkel zur Förderrichtung F eine Leitfläche 8, beginnend von der äußeren Längsseite des Förderbandes 2c, schräg über den Zwischenförderer 2 in Richtung zum Abförderer 3.

Der Zuförderer 1 besitzt einen eigenen Antriebsmotor M1, der dem Förderband 1c zugeordnet ist. Die Förderbänder 1b und 1a sind über Zugmittelgetriebe 11 und 12 mit dem Antriebsmotor M1 verbunden. Dem Zwischenförderer 2 ist ebenfalls ein eigener Antriebsmotor M2 zugeordnet, wobei das in Förderrichtung F verlängerte, als Abförderer 3 dienende Förderband 2a durch ein Zugmittelgetriebe 13 mit dem Antriebsmotor M2 in Verbindung steht.

Bei dem dargestellten Ausführungsbeispiel werden einen ovalen Querschnitt aufweisende Formgläser 14 von einem nicht dargestellten Palettenstapel durch einen Neuglasabräumer 5 lagenweise abgenommen und durch dessen im rechten Winkel quer zum Zuförderer 1 antreibbaren Abräumtisch 15 auf den Zuförderer 1 übergeschoben. Zur Spaltüberbrückung ist zwischen den Förderbändern des Abräumtisches 15 und dem Förderband 1a des Zuförderers 1 eine Überschubleiste 7 angeordnet. Dem Neuglasabräumer 5 ist gegenüberliegend eine quer zum Zuförderer 1 vor- und zurückbewegbare, pneumatisch betätigte Gegenhalteleiste 10 angeordnet.

Alle Förderbänder des Neuglasabräumers 5, des Zuförderers 1, des Zwischenförderers 2 und Abförderers 3 bilden eine gemeinsame Förderebene.

Die Länge der drei gleichlangen Taktstrecken Ta, Tb und Tc entspricht der Länge N einer durch den Neuglasabräumer 5 bei einem Arbeitstakt auf den Zuförderer 1 übergebenen Gefäßreihe plus einem erforderlichen Sicherheitsabstand S. Die bei einem Fördertakt vom Zuförderer 1 an den Zwischenförderer 2 abgegebenen einspurigen Gefäßpulks A, B und C besitzen ebenfalls in etwa die Länge N, d.h. es werden pro Förderspur die gleiche Anzahl Gefäße abgeführt, wie durch den Neuglasabräumer 5 nachgeschoben werden.

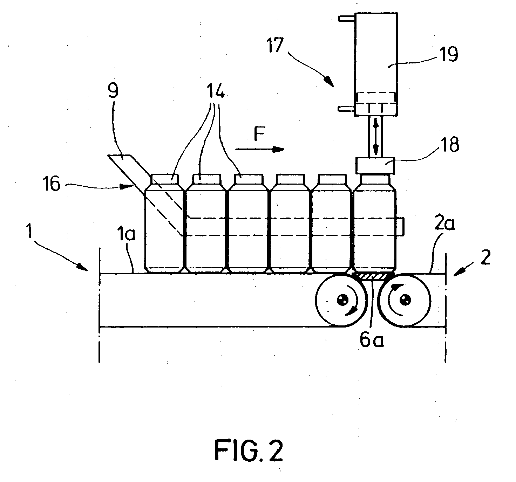

Durch Trenngeländer 9 werden die auf dem Zuförderer 1 stehenden Gefäßreihen jeweils bis zu den Überschubblechen 6a, 6b und 6c voneinander getrennt geführt. Um den zuvor vom Neuglasabräumer 5 auf den Zuförderer 1 übergeschobenen Formgläsern 14 beim Fördertakt der Förderbänder 1a, 1b und 1c das Einlaufen in die durch die Trenngeländer 9 gebildeten Führungskanäle zu erleichtern, ist der Einlaufbereich bzw. die Einlaufkante 16 (siehe Fig. 2) des Trenngeländers 9 schräg von oben nach unten in Förderrichtung F verlaufend ausgebildet.

Entlang der äußeren Längsseiten des Zuförderers 1 und des Zwischenförderers 2 sind nicht näher dargestellte Führungsgeländer angeordnet, die sich bis zum Abförderer 3 erstrecken. Auch der Abförderer 3 und das nachfolgende Aufholband 4 sind mit Führungsgeländern ausgestattet.

Nachfolgend wird das mit der vorstehend beschriebenen Vorrichtung durchführbare Verfahren ab Produktionsbeginn beschrieben, d.h. der Zuförderer 1 ist noch nicht mit Formgläsern 14 belegt. Zuerst werden vom Abräumtisch 15 des Neuglasabräumers 5 drei parallele Reihen von Formgläsern 14 quer auf die stillstehenden Förderbänder 1a, 1b und 1c des Zuförderers 1 übergeschoben, wobei die pneumatische Gegenhalteleiste 10 der Querbewegung der Formgläser 14 folgt. Im Stillstand des Abräumtisches 15 werden die drei Formglasreihen durch weiteres Zurückfahren der Gegenhalteleiste 10 entlastet und anschließend durch die Förderbänder 1a, 1b und 1c des Zuförderers 1 in Förderrichtung F um die Taktstrecke Ta bis zum Uberschubblech 6a gefördert. Danach wird der Antrieb des Zuförderers 1 gestoppt und es werden durch den Abräumtisch 15 erneut drei Reihen von Formgläsern auf den Zuförderer 1 übergeschoben. Beim darauffolgenden Fördertakt des Zuförderers 1 werden die im Bereich der Taktstrecke Ta stehenden Formgläser um die Taktstrecke Tb bis zum Überschubblech 6b transportiert, wobei die auf dem Förderband 1a stehenden Formgläser auf das kontinuierlich angetriebene Förderband 2a des Zwischenförderers 2 abgegeben und zum Aufholband 4 gefördert werden, während die nachfolgenden drei Reihen von Formgläsern gleichzeitig bis in Höhe des Überschubbleches 6a gefördert werden, bevor der Zuförderer 1 erneut gestoppt wird. Von den Förderbändern 1a und 1b werden beim nächsten Fördertakt je ein einspuriger Pulk von Formgläsern 14 gleichzeitig an die kontinuierlich angetriebenen Förderbänder 2a und 2b abgegeben. Der auf dem Förderband 2b um eine Taktstrecke vorauslaufende Pulk trifft im Umformbereich U auf die schrägstehende Leitfläche 8 und wird vor dem nachfolgenden Pulk durch Querverschieben auf das Förderband 2a eingeordnet. Ab dem nächsten Fördertakt werden vom Zuförderer 1 jeweils drei einspurige, in Förderrichtung F hintereinander versetzte Pulks A, B, C von Formgläsern 14 an den kontinuierlich laufenden Zwischenförderer 2 abgegeben und durch die Leitfläche 8 im Umformbereich U in eine einzige einspurige Reihe eingeordnet. Der von den Förderbändern 1c und 2c stammende Pulk C wird durch die Leitfläche 8 über das Förderband 2b hinweg auf das Förderband 2a und der Pulk B von den Förderbändern 1b, 2b ebenfalls auf das Förderband 2a überführt, während der vom Förderband 1a stammende Pulk A ohne Kontakt zur Leitfläche direkt zum Aufholband 4 läuft. Zum Aufschließen der noch vorhandenen Lücken kann das regelbare Aufholband 4 die Formgläser 14 beschleunigen, bis sie auf das Ende der ablaufenden, geschlossenen Formglasreihe treffen.

Das Aufholband 4 und die Förderbänder des Zwischenförderers 2 sind synchron zur Momentanleistung einer Formglasbehandlungsanlage, z.B. Füllanlage, regelbar. Während eines Fördertaktes des Zuförderers 1 werden dessen Förderbänder 1a, 1b, 1c auf die Geschwindigkeit des Zwischenförderers 2 beschleunigt.

Die Leitfläche 8 kann zur Verringerung der Reibung mit frei drehbar gelagerten Rollen oder einem antreibbaren Riemen ausgestattet sein. Ferner kann an Stelle einer stationär angeordneten Leitfläche eine quer zur Förderrichtung F periodisch mit dem Fördertakt hin- und herbewegbare Leitfläche eingesetzt werden.

Abweichend vom dargestellten Ausführungsbeispiel können sich die Förderbänder 2a, 2b, 2c des Zwischenförderers 2 nicht nur stumpf, sondern auch seitlich an den Förderbändern 1a, 1b, 1c des Zuförderers 1 anschließen. Bei einer derartigen Ausführung können die Überschubbleche 6a, 6b, 6c entfallen. Stattdessen müßten jeweils kurze Überführungsgeländer zum Überleiten der Formgläser von den Förderbändern des Zuförderers auf die des Zwischenförderers vorgesehen werden. Ferner könnte die Leitfläche 8 bei dem dargestellten Ausführungsbeispiel ohne Zwischenabstand unmittelbar nach dem Überschubblech 6c beginnen. Außerdem könnte der Zuförderer auch durch den Antrieb des Zwischenförderers betätigt werden, wenn der Motor M1 durch eine schaltbare Kupplung ersetzt würde.

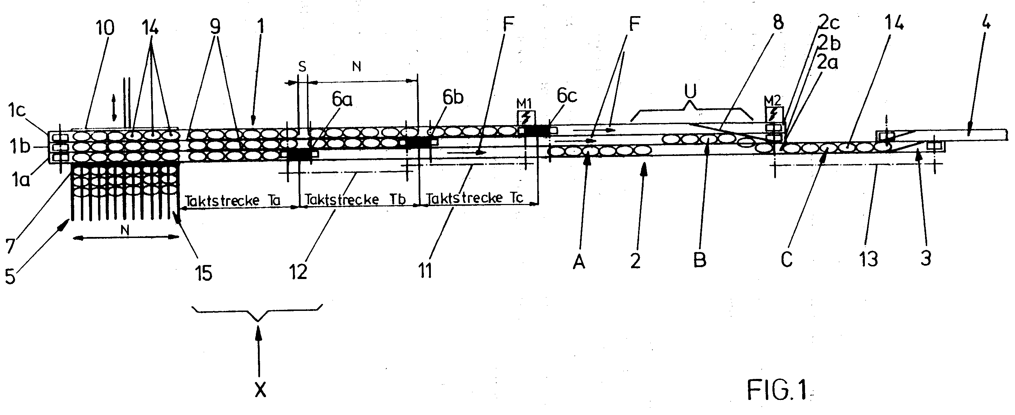

Außerdem können zur Erhöhung der Betriebssicherheit einer derartigen Zusammenführung im Übergangsbereich der einzelnen Förderbänder des Zuförderers 1 und Zwischenförderers 2 steuerbare Sperreinrichtungen 17 vorgesehen werden. In Fig. 2 ist eine Zusammenführung nach der in Fig. 1 dargestellten Bauart erkennbar, wobei im Bereich der Überschubbleche 6 (6b, c in Fig. 2 nicht dargestellt) jeweils eine Sperreinrichtung 17 angeordnet ist. Jede Sperreinrichtung 17 besitzt einen senkrecht zur Förderebene heb- und senkbaren Stempel 18, der am unteren Ende der Kolbenstange eines steuerbaren Pneumatikzylinders 19 befestigt ist. Die Ansteuerung der Sperreinrichtungen 17 erfolgt in Verbindung mit dem Antrieb des Zuförderers 1, d.h. wenn der Antrieb des Zuförderers 1 aktiviert wird, um Formgläser 14 an den Zwischenförderer 2 abzugeben, werden gleichzeitig oder geringfügig früher die Stempel 18 nach oben angehoben, wodurch die axiale Einspannung der auf den Überschubblechen 6 stehenden Formgläser 14 aufgehoben wird. Sobald die Gefäßübergabe an den Zwischenförderer 2 beendet werden soll, können die Stempel 18 abgesenkt werden, wodurch die gerade auf den Überschubblechen 6 stehenden Formgläser eingespannt und festgehalten werden. Dieser Sperrvorgang kann dann eingeleitet werden, wenn gerade das jeweils letzte Gefäß der Pulks A, B oder C das Überschubblech erreicht hat und der Antrieb des Zuförderers 1 gestoppt wird. Durch die Sperreinrichtungen 17 wird eine unkontrollierte Gefäßabgabe zum falschen Zeitpunkt, z.B. durch Vibrationen des Überschubbleches, zuverlässig unterbunden.

## Patentansprüche

1. Verfahren zum Umformen eines mehrspurigen Gefäßstromes in einen einspurigen Gefäßstrom, wobei die Gefäße mehrspurig einem Umformbereich zugeführt und von diesem einspurig abgeführt werden, dadurch gekennzeichnet, daß vom mehrspurigen Gefäßstrom taktweise einspurige Gefäßpulks derart an den Umformbereich abgegeben werden, daß die Gefäßpulks in Förderrichtung hintereinander und quer zur Förderrichtung parallel zueinander versetzt angeordnet sind, und die Gefäßpulks im Umformbereich dann nacheinander in eine kontinuierlich abförderbare, einspurige Gefäßreihe eingeordnet werden.

2. Verfahren nach Anspruch 1, dadurch gekennzeichnet, daß die hintereinander versetzt angeordneten Gefäßpulks im Umformbereich durch Verschieben quer zur Förderrichtung in eine einspurige Gefäßreihe zusammengeführt und vom Umformbereich abgefördert werden.

3. Verfahren nach wenigstens einem der vorhergehenden Ansprüche, dadurch gekennzeichnet, daß die Spuren des mehrspurigen Gefäßstromes bei einem Fördertakt gleichzeitig in Bewegung gesetzt werden und die zum Umformbereich weisenden vorderen Enden der einzelnen, nebeneinander stehenden Gefäßreihen in Förderrichtung treppenartig hintereinander versetzt sind.

4. Verfahren nach Anspruch 3, dadurch gekennzeichnet, daß die Fördertaktdauer so bemessen ist, daß die Länge eines vom mehrspurigen Gefäßstrom an den Umformbereich abgegebenen Gefäßpulks maximal dem Maß des treppenartigen Versatzes zwischen zwei nebeneinander im mehrspurigen Gefäßstrom stehenden Gefäßreihen entspricht.

5. Verfahren nach einem der Ansprüche 3 oder 4, dadurch gekennzeichnet, daß die Zeitspanne zwischen zwei Fördertakten des mehrspurigen Gefäßstromes so bemessen ist, daß der auf einen vorhergehenden Fördertakt folgende nächste Fördertakt frühestens dann beginnt, wenn das Pulkende des in Förderrichtung gesehen letzten Gefäßpulks den Anfang der vordersten, im mehrspurigen Gefäßstrom stehenden Gefaßreihe erreicht hat.

6. Verfahren nach wenigstens einem der vorhergehenden Ansprüche, dadurch gekennzeichnet, daß die Gefäßpulks im Umformbereich kontinuierlich, insbesondere mit einer der Geschwindigkeit des kontinuierlich aus dem Umformbereich abgeförderten einspurigen Gefäßstromes entsprechenden Geschwindigkeit, gefördert werden.

7. Verfahren nach wenigstens einem der vorhergehenden Ansprüche, dadurch gekennzeichnet, daß nach dem Zusammenführen der Gefäßpulks in eine einspurige Gefäßreihe diese zum Schließen von Lücken zumindest geringfügig beschleunigt wird.

8. Verfahren nach wenigstens einem der vorhergehenden Ansprüche, dadurch gekennzeichnet, daß dem Ende des mehrspurigen Gefäßstromes während der Stillstandsphase zwischen zwei Fördertakten Gefäße, vorzugsweise im wesentlichen quer zur Förderrichtung, zugeführt werden.

9. Vorrichtung zum Umformen eines mehrspurigen Gefäßstromes in einen einspurigen Gefäßstrom, wobei die Vorrichtung einen mehrere parallel verlaufende Gefäßreihen aufnehmenden Zuförderer (1), einen sich in Förderrichtung (F) anschließenden Umformbereich (U) mit einem Zwischenförderer (2) und einen Abförderer (3) aufweist, dadurch gekennzeichnet, daß der Zuförderer (1) taktweise antreibbar ist, derart, daß in Förderrichtung (F) hintereinander und quer zur Förderrichtung (F) parallel zueinander versetzte, einspurige Gefäßpulks (A, B, C) an den Zwischenförderer (2) abgegeben werden, die im Umformbereich (U) in eine einspurige Gefäßreihe eingeordnet werden.

10. Vorrichtung nach Anspruch 9, dadurch gekennzeichnet, daß im Umformbereich (U) eine sich quer im spitzen Winkel über den Zwischenförderer (2) zum Abförderer (3) hin erstreckende Leitfläche (8) vorhanden ist, die die einspurigen Gefäßpulks (B, C) durch Querverschieben zur Förderrichtung (F) in eine einspurige Gefäßreihe zusammenführt.

11. Vorrichtung nach Anspruch 9, dadurch gekennzeichnet, daß der Zuförderer (1) mindestens eine der Zahl der Gefäßreihen entsprechende Anzahl von Förderspuren (1a, 1b, 1c) aufweist, die gemeinsam taktweise antreibbar sind und deren zum Umformbereich (U) weisenden Enden in Förderrichtung (F) treppenartig hintereinander versetzt sind.

12. Vorrichtung nach Anspruch 11, dadurch gekennzeichnet, daß der Zwischenförderer (2) eine der Zahl des Zuförderers (1) entsprechende Anzahl von Förderspuren (2a, 2b, 2c) aufweist, wobei sich die Förderspuren (2a, 2b, 2c) an die Förderspuren (1a, 1b, 1c) des Zuförderers (1) anschließen und gemeinsam kontinuierlich antreibbar sind.

13. Vorrichtung nach Anspruch 12, dadurch gekennzeichnet, daß eine Förderspur (2a) des Zwischenförderers (2) in Förderrichtung (F) verlängert ausgebildet ist und den Abförderer (3) bildet.

14. Vorrichtung nach einem der Ansprüche 9 bis 13, dadurch gekennzeichnet, daß sich an den Abförderer (3) ein unabhängig antreibbares Aufholband (4) anschließt.

15. Vorrichtung nach Anspruch 9, dadurch gekennzeichnet, daß der Zuförderer (1) bei einem Fördertakt auf die Fördergeschwindigkeit des Zwischenförderers (2) beschleunigt wird.

16. Vorrichtung nach Anspruch 9, dadurch gekennzeichnet, daß der Zwischenförderer (2) kontinuierlich mit der Fördergeschwindigkeit des Abförderers (3) antreibbar ist.

17. Vorrichtung nach Anspruch 9, dadurch gekennzeichnet, daß die Fördergeschwindigkeit des Abförderers (3), des Zwischenförderers (2) und des Zuförderers (1) -während eines Fördertaktes- synchron an die Momentanleistung einer Gefäßbehandlungsanlage anpaßbar ist.

18. Vorrichtung nach Anspruch 11, dadurch gekennzeichnet, daß das Maß des treppenartigen Versatzes zwischen den Förderspuren (1a, 1b, 1c) des Zuförderers (1) mindestens der Länge (N) der während der Stillstandsphase zwischen zwei Fördertakten auf den Zuförderer (1) überführten Gefäßreihen entspricht.

19. Vorrichtung nach Anspruch 9, dadurch gekennzeichnet, daß dem Zuförderer (1) in der Stillstandsphase zwischen zwei Fördertakten Gefäße (14) im wesentlichen quer zur Förderrichtung (F), insbesondere durch einen Neuglasabräumer (5), zugeführt werden.

20. Vorrichtung nach Anspruch 19, dadurch gekennzeichnet, daß dem Neuglasabräumer (5) gegenüberliegend eine quer zur Förderrichtung (F) hin- und herbewegbare Gegenhalteleiste (10) zugeordnet ist, die vorzugsweise pneumatisch betätigbar ist.

21. Vorrichtung nach Anspruch 9, dadurch gekennzeichnet, daß über dem Zuförderer (1) zwischen den Förderspuren (1a, 1b, 1c) Trenngeländer (9) angeordnet sind, die sich jeweils bis zum Anfang des Zwischenförderers (2) erstrecken.

22. Vorrichtung nach Anspruch 21, dadurch gekennzeichnet, daß der Einlaufbereich der Trenngeländer (9) eine schräg von oben nach unten in Förderrichtung (F) verlaufende Einlaufkante (16) aufweist.

23. Vorrichtung nach wenigstens einem der vorhergehenden Ansprüche 9 bis 22, dadurch gekennzeichnet, daß im Übergangsbereich zwischen dem Zuförderer (1) und dem Zwischenförderer (2) steuerbare Sperreinrichtungen (17) angeordnet sind.

24. Vorrichtung nach Anspruch 23, dadurch gekennzeichnet, daß die Sperreinrichtungen (17) bei einem Fördertakt des Zuförderers (1) den Förderweg der Gefäße (14) zum Zwischenförderer (2) freigeben.

25. Vorrichtung nach Anspruch 23 und 24, dadurch gekennzeichnet, daß sich die Förderspuren (2a, 2b, 2c) des Zwischenförderers (2) stumpf an die Förderspuren (1a, 1b, 1c) des Zuförderers (1) mittels Überschubbleche (6a, 6b, 6c) anschließen und die Sperreinrichtungen (17) jeweils den Überschubblechen zugeordnet sind.

26. Vorrichtung nach den Ansprüchen 23 bis 25, dadurch gekennzeichnet, daß die Sperreinrichtungen (17) oberhalb der Überschubbleche (6a, 6b, 6c) angeordnet sind und jeweils einen senkrecht zur Förderebene gesteuert heb-und senkbaren Stempel (18) zum axialen Einspannen von Gefäßen (14) auf den Überschubblechen aufweisen.

## Claims

1. Method for transforming a multiple-file stream of containers into a single-file stream of containers, wherein the containers are fed in multiple file to a transformation region and led away from the latter in single file, characterised in that single-file groups of containers from the multiple-file stream of containers are delivered to the transformation region in such a manner that the groups of containers are arranged one behind the other in the transport direction and transposed parallel to one another transversely to the transport direction, and the groups of containers in the transformation region are then merged into a continuously removable, single-file row of containers.

2. Method according to claim 1, characterised in that the groups of containers arranged in transposed manner one behind the other are brought together in the transformation region by displacement transversely to the transport direction into a row of containers in single file and transported away from the transformation region.

3. Method according to at least one of the preceding claims, characterised in that the files of the multiple-file stream of containers are simultaneously set in motion during a transport cycle and the front ends pointing to the transformation region of the individual rows of containers standing beside one another are displaced in stepped manner behind one another in the transport direction.

4. Method according to claim 3, characterised in that the duration of the transport cycle is gauged so that the length of a group of containers delivered from the multiple-file stream of containers to the transformation region corresponds at maximum to the size of the echelon-like displacement between two rows of containers standing beside one another in the multiple-file stream of containers.

5. Method according to one of the claims 3 or 4, characterised in that the time interval between two transport cycles of the multiple-file stream of containers is of such a size that the next transport cycle following on a preceding transport cycle begins at the earliest when the group end seen in the transport direction of the last group of containers has reached the beginning of the foremost row of containers standing in the multiple-file stream of containers.

6. Method according to at least one of the preceding claims, characterised in that the groups of containers in the transformation region are continuously transported, especially at a speed corresponding to the speed of the single-file stream of containers carried away continuously from the transformation region.

7. Method according to at least one of the preceding claims, characterised in that after the groups of containers have been brought together into a single-file row of containers the latter is accelerated at least slightly to close the gaps.

8. Method according to at least one of the preceding claims, characterised in that during the stationary phase between two transport cycles, containers are fed to the end of the multiple-file stream of containers preferably essentially transversely to the transport direction.

9. Device for transforming a multiple-file stream of containers into a single-file stream of containers, wherein the device comprises a delivery conveyor (1) receiving a plurality of rows of containers extending in parallel, a transformation region (U) adjoining in the transport direction (F) with an intermediate conveyor (2) and an offtake conveyor (3), characterised in that the delivery conveyor (1) can be driven in cyclical manner in such a way that single-file groups of containers (A, B, C) displaced one behind the other in the transport direction (F) and displaced parallel to one another transversely to the transport direction (F) are delivered to the intermediate conveyor (2), which groups of containers are merged in the transformation region (U) into a single-file row of containers.

10. Device according to claim 9, characterised in that in the transformation region (U) a deflecting surface (8) extending transversely at an acute angle over the intermediate conveyor (2) towards the offtake conveyor (3) is present which guides the single-file groups (B, C) by displacement transverse to the transport direction (F) into a single-file row of containers.

11. Device according to claim 9, characterised in that the delivery conveyor (1) comprises at least a number of transport tracks (1a, 1b, 1c) corresponding to the number of rows of containers, which tracks can be driven jointly in cyclical manner and the ends of which pointing to the transformation region (U) in the transport direction (F) are displaced in stepped manner behind one another.

12. Device according to claim 11, characterised in that the intermediate conveyor (2) comprises a number of conveyor tracks (2a, 2b, 2c) corresponding to the number of the delivery conveyor (1), wherein the conveyor tracks (2a, 2b, 2c) adjoin the conveyor tracks (1a, 1b, 1c) of the delivery conveyor (1) and can be driven jointly in continuous manner.

13. Device according to claim 12, characterised in that a conveyor track (2a) of the intermediate conveyor (2) is constructed in elongated manner in the transport direction (F) and forms the offtake conveyor (3).

14. Device according to one of the claims 9 to 13, characterised in that a catch-up belt (4), which can be driven independently, adjoins the offtake conveyor (3).

15. Device according to claim 9, characterised in that during a transport cycle, the delivery conveyor (1) is accelerated to the transport speed of the intermediate conveyor (2).

16. Device according to claim 9, characterised in that the intermediate conveyor (2) can be driven continuously at the transport speed of the offtake conveyor (3).

17. Device according to claim 9, characterised in that the transport speed of the offtake conveyor (3), the intermediate conveyor (2) and the delivery conveyor (1) is adjustable during a transport cycle in synchronisation with the instantaneous throughput of a container handling plant.

18. Device according to claim 11, characterised in that the size of the echelon-like displacement between the transport tracks (1a, 1b, 1c) of the delivery conveyor (1) corresponds at least to the length (N) of the rows of containers transferred on to the delivery conveyor (1) during the stationary phase between two transport cycles.

19. Device according to claim 9, characterised in that in the stationary phase between two transport cycles, containers (14) are fed to the delivery conveyor (1) essentially transversely to the transport direction (F), in particular by a new glass clearer (5).

20. Device according to claim 19, characterised in that opposite the new glass clearer (5) a counter-support bar (10) is arranged, which is movable back and forth transversely to the transport direction and is preferably actuated pneumatically.

21. Device according to claim 9, characterised in that above the delivery conveyor (1) partitioning rails (9), each extending to the beginning of the intermediate conveyor (2), are arranged between the transport tracks (1a, 1b, 1c).

22. Device according to claim 21, characterised in that the entry region of the partitioning rails (9) has an entry edge (16) running in sloping manner from top to bottom in the transport direction (F).

23. Device according to at least one of the preceding claims 9 to 22, characterised in that in the transition region between the delivery conveyor (1) and the intermediate conveyor (2) controllable blocking devices (17) are arranged.

24. Device according to claim 23, characterised in chat during a transport cycle of the delivery conveyor (1), the blocking devices (17) liberate the transport path of the containers (14) to the intermediate conveyor (2).

25. Device according to claim 23 and 24, characterised in that the transport tracks (2a, 2b, 2c) of the intermediate conveyor (2) are butt-jointed to the transport tracks (1a, 1b, 1c) of the delivery conveyor (1) by means of transfer plates (6a, 6b, 6c) and the blocking devices (17) are each associated with the transfer plates.

26. Device according to claims 23 to 25, characterised in that the blocking devices (17) are arranged above the transfer plates (6a, 6b, 6c) and comprise in each case a plunger (18) which can be raised and lowered in controllable manner perpendicularly to the transport plane for the axial clamping of containers (14) on the transfer plates.

## Revendications

1. Procédé pour la transformation d'un flux de récipients à plusieurs voies en une voie unique, les récipients étant amenés en plusieurs voies à une zone de transformation, et évacués de cette dernière en une voie, caractérisé en ce qu'une formation serrée de récipients à une voie est transférée en cadence du flux à plusieurs voies dans la zone de transformation, de sorte que les formations de récipients sont disposées les unes derrière les autres dans le sens de transport, et sont déportées parallèlement entre elles à la transversale du sens de transport, les formations de récipients étant ensuite ordonnées dans la zone de transformation, les unes après les autres, en une rangée à une voie, évacuable en continu.

2. Procédé suivant la revendication 1, caractérisé en ce que les formations serrées de récipients, disposées en déport les unes derrière les autres, sont regroupées en une voie dans la zone de transformation, par déplacement à la transversale du sens de transport, et sont évacuées de la zone de transformation.

3. Procédé suivant l'une au moins des revendications précédentes, caractérisé en ce que les voies du flux de récipients à plusieurs voies sont mises en mouvement simultanément lors d'un cycle de transport, les extrémités avant, dirigées vers la zone de transformation, des différentes rangées de récipients juxtaposées étant déportées les unes derrière les autres en escalier dans le sens de transport.

4. Procédé suivant la revendication 3, caractérisé en ce que la durée d'un cycle de transport est calculée de sorte que la longueur d'une formation serrée, transférée du flux de récipients à plusieurs voies dans la zone de transformation, correspond au maximum à la valeur du déport en escalier entre deux rangées de récipients, juxtaposées dans le flux à plusieurs voies.

5. Procédé suivant l'une des revendications 3 ou 4, caractérisé en ce que l'intervalle de temps entre deux cycles de transport du flux de récipients à plusieurs voies est calculé de sorte, que le cycle de transport suivant un cycle de transport précédent commence au plus tôt lorsque l'extrémité de la dernière formation de récipients, vu dans le sens de transport, a atteint le début de la rangée de récipients avant, située dans le flux à plusieurs voies.

6. Procédé suivant l'une au moins des revendications précédentes, caractérisé en ce que les formations serrées de récipients sont acheminées en continu dans la zone de transformation, en particulier à une vitesse correspondante à celle du flux de récipients à une voie, évacué en continu de la zone de transformation.

7. Procédé suivant l'une au moins des revendications précédentes, caractérisé en ce que, après le regroupement des formations de récipients en une rangée à une voie, cette dernière est accélérée, légèrement du moins, pour combler les vides.

8. Procédé suivant l'une au moins des revendications précédentes, caractérisé en ce que des récipients sont amenés, essentiellement à la transversale du sens de transport de préférence, à l'extrémité du flux de récipients à plusieurs voies, pendant la phase d'arrêt entre deux cycles de transport.

9. Dispositif pour la transformation d'un flux de récipients à plusieurs voies en une voie unique, le dispositif présentant un convoyeur d'alimentation (1), recevant plusieurs rangées de récipients parallèles entre elles, une zone de transformation (U) consécutive dans le sens de transport (F) et dotée d'un convoyeur intermédiaire (2), et un convoyeur d'évacuation (3), caractérisé en ce que le convoyeur d'alimentation (1) est entraînable par cycles, de sorte que des formations serrées de récipients à une voie (A, B, C), disposées les unes derrière les autres dans le sens de transport (F), et déportées parallèlement les unes par rapport aux autres à la transversale du sens de transport (F), sont transférées sur le convoyeur intermédiaire (2), ces formations étant ordonnées dans la zone de transformation (U) en une rangée de récipients à une voie.

10. Dispositif suivant la revendication 9, caractérisé en ce qu'une surface de guidage (8), s'étendant en direction du convoyeur d'évacuation (3), à la transversale et sous un angle aigu au-dessus du convoyeur intermédiaire (2), est prévue dans la zone de transformation (U), cette surface regroupant les formations serrées de récipients (B, C) à une voie, par déplacement transversal par rapport au sens de transport (F), en une rangée de récipients à une voie.

11. Dispositif suivant la revendication 9, caractérisé en ce que le convoyeur d'alimentation (1) présente au moins un nombre de voies de transport (1a, 1b, 1c), correspondant au nombre des rangées de récipients, ces voies étant entraînables conjointement par cycles, et leurs extrémités, dirigées vers la zone de transformation (U), étant déportées les unes derrière les autres en escalier dans le sens de transport (F).

12. Dispositif suivant la revendication 11, caractérisé en ce que le convoyeur intermédiaire (2) présente un nombre de voies de transport (2a, 2b, 2c), correspondant au nombre de celles du convoyeur d'alimentation (1), les voies de transport (2a, 2b, 2c) se si tuant dans le prolongement des voies de transport (1a, 1b, 1c) du convoyeur d'alimentation (1), et étant entraînables conjointement en continu.

13. Dispositif suivant la revendication 12, caractérisé en ce qu'une voie de transport (2a) du convoyeur intermédiaire (2) est prolongée dans le sens de transport (F), et forme le convoyeur d'évacuation (3).

14. Dispositif suivant l'une des revendications 9 à 13, caractérisé en ce qu'une bande de reprise (4), entraînable indépendamment, se situe dans le prolongement du convoyeur d'évacuation (3).

15. Dispositif suivant la revendication 9, caractérisé en ce que le convoyeur d'alimentation (1) est accéléré, lors d'un cycle de transport, à la vitesse du convoyeur intermédiaire (2).

16. Dispositif suivant la revendication 9, caractérisé en ce que le convoyeur intermédiaire (2) est entraînable en continu à la vitesse de transport du convoyeur d'évacuation (3).

17. Dispositif suivant la revendication 9, caractérisé en ce que la vitesse de transport du convoyeur d'évacuation (3), du convoyeur intermédiaire (2), et du convoyeur d'alimentation (1), pendant un cycle de transport, est adaptable en synchronisme à la puissance momentanée d'une installation de traitement de récipients.

18. Dispositif suivant la revendication 11, caractérisé en ce que la valeur du déport en escalier entre les voies de transport (1a, 1b, 1c) du convoyeur d'alimentation (1) correspond au moins à la longueur (N) des rangées de récipients, transférées sur le convoyeur d'alimentation (1) pendant la phase d'arrêt entre deux cycles de transport.

19. Dispositif suivant la revendication 9, caractérisé en ce que des récipients (14) sont amenés au convoyeur d'alimentation (1) dans la phase d'arrêt entre deux cycles de transport, essentiellement à la transversale du sens de transport (F), par un déblayeur de verres neufs (5) en particulier.

20. Dispositif suivant la revendication 19, caractérisé en ce qu'une barre de contre-appui (10), pouvant être animée d'un mouvement de va-et-vient à la transversale du sens de transport (F), est associée en vis-à-vis du déblayeur de verres neufs (5), cette barre étant actionnable pneumatiquement de préférence.

21. Dispositif suivant la revendication 9, caractérisé en ce que des rampes séparatrices (9) sont disposées au-dessus du convoyeur d'alimentation (1), entre les voies de transport (1a, 1b, 1c), ces rampes s'étendant respectivement jusqu'au début du convoyeur intermédiaire (2).

22. Dispositif suivant la revendication 21, caractérisé en ce que la zone d'entrée des rampes séparatrices (9) présente un bord d'entrée (16), disposé obliquement du haut vers le bas dans le sens de transport (F).

23. Dispositif suivant l'une au moins des revendications précédentes 9 à 22, caractérisé en ce que des dispositifs de blocage (17), dotés d'une possibilité de commande, sont disposés dans la zone transitoire entre le convoyeur d'alimentation (1) et le convoyeur intermédiaire (2).

24. Dispositif suivant la revendication 23, caractérisé en ce que les dispositifs de blocage (17) dégagent le parcours de transport des récipients (14) en direction du convoyeur intermédiaire (2), lors d'un cycle de transport du convoyeur d'alimentation (1).

25. Dispositif suivant les revendications 23 et 24, caractérisé en ce que les voies de transport (2a, 2b, 2c) du convoyeur intermédiaire (2) se situent bout à bout dans le prolongement des voies de transport (1a, 1b, 1c) du convoyeur d'alimentation (1), au moyen de tôles de transfert (6a, 6b, 6c), les dispositifs de blocage (17) étant respectivement associés aux tôles de transfert.

26. Dispositif suivant les revendications 23 à 25, caractérisé en ce que les dispositifs de blocage (17) sont disposés au-dessus des tôles de transfert (6a, 6b, 6c), et présentent respectivement un piston (18), relevable et abaissable par une commande à la perpendiculaire du plan de transport, pour le serrage axial des récipients (14) sur les tôles de transfert.
